# EUROPEAN PATENT SPECIFICATION

(11) **EP 1 399 703 B1**
(45) Date of publication and mention of the grant of the patent: **11.11.2009**
(21) Application number: 02778880.1
(22) Date of filing: 05.06.2002
(51) Int. Cl.: F41H 5/04, B32B 27/12, B32B 5/28

(54) **LAMINATED BALLISTIC STRUCTURE COMPRISING ALTERNATING UNIDIRECTIONAL AND THERMOPLASTIC LAYERS**
LAMINIERTE BALLISTISCHE KONSTRUKTION MIT ABWECHSELNDEN UNIDIREKTIONALEN UND THERMOPLASTISCHEN LAGEN
STRUCTURE BALISTIQUE LAMINEE RENFERMANT DES COUCHES THERMOPLASTIQUES ET UNIDIRECTIONNELLES ALTERNEES

(30) Priority: 12.06.2001 EP 01114180
(43) Date of publication of application: 24.03.2004
(73) Proprietor: Teijin Aramid GmbH, 42103 Wuppertal (DE)
(72) Inventor: BERGMANS, Johannes, Maria, NL-6903 XK Zevenaar (NL); WINKLER, Ernst, Michael, NL-6824 JN Arnhem (NL); STOLZE, Kurt, Rainer, Hans-Heinrich, 42799 Leichlingen (DE); ROSE, Carsten, Karl, Joseph, 42289 Wuppertal (DE)
(74) Representative: Heimann, Anette
(86) International application number: PCT/EP2002/006117
(87) International publication number: WO 2002/101319

(56) References cited:
- EP-A- 0 645 597
- WO-A-99/61862
- US-A- 4 916 000
- US-A- 5 935 678

## Description

The invention pertains to a laminated ballistic structure comprising alternating unidirectional (UD) and thermoplastic layers.

Laminated ballistic structures comprising UD and thermoplastic layers are known in the art. For instance, in US 5,935,678 a ballistic laminate structure is disclosed composed of UD layers of polyethylene fibers. A polyethylene films is located between two UD layers. Between the UD layers the film is provided to keep the layers together, without embedding the individual fibers in the polyethylene. UD layers are layers of fibers with parallel filaments. Usually, however, ballistic structures comprise ballistic layers of fibers, such as aramid or high-density polyethylene fibers, embedded in a rubber or rubber-like matrix. Such ballistic structures are, for instance, described in US 4,916,000, wherein the individual filaments of the ballistic layers are (preferably) fully coated with a thermoplastic elastomeric material, such as Kraton. Both types of ballistic structures, have disadvantages. The common ballistic structures that contain matrix material, such as that of US 4,916,000, show a lower resistance to ballistic impact than structures like US 5,935,678. At higher matrix contents these structures show a decrease of ballistic performance with increasing amounts of matrix and further an increase of weight due to the matrix material. The amount of matrix cannot be reduced too much without taking the risk to obtain unstable ballistic structures. Ballistic structures having a thermoplastic film between the UD layers as disclosed in US 5,935,678, although having very good ballistic properties, were found to be extremely unstable upon ballistic impact (see Experimental). Therefore, there is still a considerable need to ballistic structures that show a high resistance to ballistic impact and at the same time have a high stability.

It is an object of the present invention to provide a laminated ballistic structure with a high ballistic impact resistance and a high stability.
It was found that these objectives are met when using a laminated ballistic structure comprising an array of layers of substantially alternating n unidirectional (UD) layers of ballistic fiber and m thermoplastic layers, excluding thermoplastic layers at the outer sides of the structure, wherein 1/2 n≤m<n and the UD layers comprise 1-25 wt.% of an elastomeric material based on the dry fiber weight.

The ballistic structures of the present invention show an excellent ballistic performance, whereas the layers are stable and do not delaminate upon ballistic impact. It is emphasized that it is required that a substantial number of thermoplastic layers are present, at least half of the number of ballistic UD layers. Preferably, each UD layer alternates with a thermoplastic layer, but it usually has no dramatic effect when such a regularity of layer structure is violated from time to time. For clarity's sake it is further emphasized that two or more thermoplastic layers can be provided between two UD layers. Since such multiple thermoplastic layers are fused together under the high pressure and temperature that is used during the production of these laminated structures, such multiple thermoplastic layers are considered as one layer according to this invention. When both sides of each UD layer are adjacent to a thermoplastic layer, the number of thermoplastic layers is one higher than the number of UD layers. The outer sides of the laminated structure may contain thermoplastic layers, for instance at both sides a thermoplastic layer that serves as protective films. These thermoplastic layers at the outer sides of the structure are not contained in the number "m" that stands for the number of other thermoplastic layers. When these thermoplastic outer layers are not provided, protective layers of any other suitable material can be provided instead. Moreover, even when the outer sides of the laminated structure are provided with thermoplastic layers, in addition thereto further protective layers of any other suitable material can be provided, if one whishes so. It is further emphasized that the structures of the invention are particularly useful for making laminated hard ballistic structures. When the multiple layers contain many layers, such structures are less suitable or not suitable for soft ballistic applications. For hard ballistic applications the number of UD layers is usually more than 5, more preferably more than 8. It is very common to apply 8-25 UD layers and to apply between each of these layers, or at least between most of these layers, a thermoplastic layer.

It was further found that the use of thermoplastic layers alone to fix the UD layers, although leading to excellent ballistic performance, is not sufficient to safeguard a stable ballistic structure. It was found that after pressing and heating the laminated structure the thermoplastic layers are in intense contact with the UD layers, but the thermoplastic material does not fully surround and fully impregnate each of the fibers. Therefore, it is believed that the structure has not enough stability. The desired stability was found to be obtained when minor quantities of an elastomeric material were used as a matrix material. These quantities are usually substantially smaller than those as used in the prior art ballistic structures. Moreover, it is not necessary that the matrix fully coats the individual filaments, as is preferred in the case of the prior art. The present matrix thus serves a different purpose, in that it not longer fixes the UD layers but only prevents delamination thereof. The fixing as such is obtained by means of the thermoplastic layers between the UD layers.

Suitable thermoplastic materials are, for instance, polyethylene and polypropylene, whereas the elastomeric matrix is usually a rubber or rubber-like material, such as Kraton or polyurethane resin, which are commonly used in ballistic structures. Also other materials such as polybutadiene, polyisoprene, natural rubber, plasticized polyvinylchloride, polyacrylates, polyesters, and the like. The structure comprises 1-25 wt.%, preferably 3-15 wt.%, and more preferably 5-12 wt.% of an elastomeric material based on the dry fiber (dry yarn) weight. The layer thickness of the thermoplastic layers is between 1 and 250 µm, preferably 6-50 µm, and more preferably 10-25 µm.
The UD layers are preferably cross-plied, for instance at angles of 0 and 90°.

Suitable ballistic fibers are chosen from aramid, polyolefine, and rigid rod polymers. Preferred aramid fibers are made of p-aramid such as Twaron^{™}, Kevlar^{™}. and Technora^{™}. Polyolefine fibers are preferably high density polyethylene such as Spectra^{™} and Dyneema^{™}. Suitable fibers of rigid rod polymers are selected from PBO (poly-p-phenylenebenzobisoxazole) such as Zylon^{™} and PBI (poly-p-phenylene-benzobisimidazole) such as "M5".

Although in most instances not necessary, the ballistic structure may comprise rigid panels, for instance of a ceramic material or steel.

The invention is further illustrated by means of the following experiments.

In all experiments UD-sheets with a width of 50 cm were made from 250 yarns Twaron^{™} 2000, 3360 dtex f1000 by spreading the yarns evenly over the entire width.

### Experiment 1 (comparison)

An LDPE-film (ex Bührmann) with a thickness of 15 µm was laminated on the yarns at a temperature of 150°C. The resulting UD-sheet was cut into pieces of 50 cm length. Two pieces of UD were cross-plied (0 and 90 degrees) with the films on the outer sides. An LDPE-film (ex Borden) with a thickness of 23 µm was placed between these two UD-sheets, giving a structure with n=2 and m=1. The sheets were pressed at 0.5 MPa pressure and a temperature of 130°C. Ten of these shields were stacked and pressed for 20 minutes at 9.5 MPa pressure and 135°C, giving a structure with n=20 and m=19. The ballistic composite has been tested with 9 mm VMR DM11 A1 B2 ammunition (made by DAG, weight of the ball is 8 g). The resulting V50-values were high (480 m/s), but the shields showed severe delamination. Hence, after several hits, the composite could not be used any more.

### Experiment 2 (comparison)

The yarns were impregnated with a Kraton dispersion (Prinlin^{™} B7137AL, ex Pierce and Stevens). After drying, a UD-sheet with a matrix content of about 15 wt.% (based on the dry yarn weight) was obtained. The sheets were cut into pieces of 50 cm length. Two pieces of UD were cross-plied (0 and 90 degrees) and pressed together at 0.06 MPa and 110°C. Ten of these shields were stacked and pressed for 20 minutes at 9.5 MPa and 135°C. Testing with the same 9 mm ammunition as in Example 1 resulted in a V50-value of 433 m/s. Even after several hits, the composite showed no delamination.

### Experiment 3

The yarns were impregnated with the Kraton dispersion as in Example 2. During drying of the dispersion (at 135°C) a 15 µm LDPE-film (ex Bührmann) was laminated on the yarn sheet as in Example 1. The dried UD-sheet contained 9 wt.% Kraton (based on the dry yarn weight). Two pieces of UD were cross-plied (0 and 90 degrees) with the films on the outside. An LDPE-film with a thickness of 15 µm was placed between these two UD-sheets. The sheets were pressed at 0.06 MPa pressure and a temperature of 110°C. Nine of these shields were stacked and pressed for 20 minutes at 9.5 MPa pressure at 135°C. Testing with the 9 mm ammunition of the previous Examples resulted in a V50-value of 467 m/s. Even after several hits, the composite showed no delamination.

### Conclusion

The results of Experiments 1-3 are denoted in the table, which shows the weight and V50 values for the shields. As comparison, the values for a standard prepreg laminate (Twaron^{™} CT 736 fabric, one-side coated with 55 g/m² PVB (polyvinylbenzene) modified phenolic resin) are also given. The shields according to the invention give a superior performance over the standard prepreg laminate but also over the shields with only PE-film or only Kraton.

| | weight (g/m²) | V50 (m/s) | weight saving (%) | difference V50 (m/s) | Delamination |
|---|---|---|---|---|---|
| Twaron^{™} CT 736 | 4368-4470 | 441-457 | 0 | 0 | No |
| Example 1 | 3680 | 480 | 17 | +31 | Yes |
| Example 2 | 3745 | 433 | 15 | -16 | No |
| Example 3 | 3537 | 467 | 20 | +18 | No |

## Claims

1. A laminated ballistic structure comprising an array of layers of substantially alternating n unidirectional (UD) layers of ballistic fiber and m thermoplastic layers, excluding thermoplastic layers at the outer sides of the structure, wherein 1/2 n≤m<n and the UD layers comprise 1-25 wt.% of an elastomeric material based on the dry fiber weight.

2. The laminated ballistic structure of claim 1 wherein the UD layers comprise 3-15 wt.% of the elastomeric material.

3. The laminated ballistic structure of claim 1 wherein the UD layers comprise 5-12 wt.% of the elastomeric material.

4. The laminated ballistic structure of claim 1 wherein the UD layers comprise 5-10 wt.% of the elastomeric material.

5. The laminated ballistic structure of any one of claims 1-4 wherein the UD layers comprise fibers with an energy-to-break > 8 J/g, a tensile modulus > 150 g/dtex, and a tenacity > 7 g/dtex.

6. The laminated ballistic structure of claim 5 wherein the UD layers comprise aramid, PBO, PBI, and/or high density polyethylene fibers.

7. The laminated ballistic structure of any one of claims 1-6 wherein the thermoplastic material is polyethylene or polypropylene.

8. The laminated ballistic structure of any one of claims 1-7 wherein the outer sides of the laminated structure are protected by a protective layer.

9. The laminated ballistic structure of claim 8 wherein the protective layer is a thermoplastic layer.

10. The laminated ballistic structure of any one of claims 1-9 wherein the structure is a laminated hard ballistic structure.

## Patentansprüche

1. Ballistische Laminatstruktur, die eine Anordnung von Schichten aus sich im Wesentlichen abwechselnden n unidirektionalen (UD) Schichten aus einer ballistischen Faser und m thermoplastischen Schichten umfasst, ausgenommen thermoplastische Schichten an den Außenseiten der Struktur, wobei ½ n ≤ m < n und wobei die UD-Schichten 1 bis 25 Gew.-% eines elastomeren Materials basierend auf dem Trockenfasergewicht enthalten.

2. Ballistische Laminatstruktur nach Anspruch 1, wobei die UD-Schichten 3 bis 15 Gew.-% des elastomeren Materials enthalten.

3. Ballistische Laminatstruktur nach Anspruch 1, wobei die UD-Schichten 5 bis 12 Gew.-% des elastomeren Materials enthalten.

4. Ballistische Laminatstruktur nach Anspruch 1, wobei die UD-Schichten 5 bis 10 Gew.-% des elastomeren Materials enthalten.

5. Ballistische Laminatstruktur nach einem der Ansprüche 1 bis 4, wobei die UD-Schichten Fasern mit einer Bruchenergie von > 8 J/g, einem Zugmodul von > 150 g/dtex und einer Höchstzugkraft von > 7 g/dtex umfassen.

6. Ballistische Laminatstruktur nach Anspruch 5, wobei die UD-Schichten AramidFasern, PBO-Fasern, PBI-Fasern und/oder Fasern aus Polyethylen hoher Dichte umfassen.

7. Ballistische Laminatstruktur nach einem der Ansprüche 1 bis 6, wobei das thermoplastische Material Polyethylen oder Polypropylen ist.

8. Ballistische Laminatstruktur nach einem der Ansprüche 1 bis 7, wobei die Außenseiten der Laminatstruktur durch eine Schutzschicht geschützt werden.

9. Ballistische Laminatstruktur nach Anspruch 8, wobei die Schutzschicht eine thermoplastische Schicht ist.

10. Ballistische Laminatstruktur nach einem der Ansprüche 1 bis 9, wobei die Struktur eine hartballistische Laminatstruktur ist.

## Revendications

1. Structure balistique stratifiée comprenant une série essentiellement constituée de n couches unidirectionnelles (UD) de fibres balistiques alternant avec m couches thermoplastiques, sans couches thermoplastiques sur les côtés extérieurs de la structure, avec 1/2 n ≤ m < n, les couches UD comprenant de 1 à 25 % en poids d'un matériau élastomère par rapport au poids de fibres sèches.

2. Structure balistique stratifiée selon la revendication 1, dans laquelle les couches UD contiennent de 3 à 15 % en poids de matériau élastomère.

3. Structure balistique stratifiée selon la revendication 1, dans laquelle les couches UD contiennent de 5 à 12 % en poids de matériau élastomère.

4. Structure balistique stratifiée selon la revendication 1, dans laquelle les couches UD contiennent de 5 à 10 % en poids de matériau élastomère.

5. Structure balistique stratifiée selon l'une quelconque des revendications 1 à 4, dans laquelle les couches UD contiennent des fibres dont l'énergie à la rupture est > 8 J/g, le module de traction > 150 g/dtex et la ténacité > 7 g/dtex.

6. Structure balistique stratifiée selon la revendication 5, dans laquelle les couches UD contiennent des fibres d'aramide, de PBO, de PBI et/ou de polyéthylène à haute densité.

7. Structure balistique stratifiée selon l'une quelconque des revendications 1 à 6, dans laquelle le matériau thermoplastique est le polyéthylène ou le polypropylène.

8. Structure balistique stratifiée selon l'une quelconque des revendications 1 à 7, dans laquelle les côtés extérieurs de la structure stratifiée sont protégés par une couche de protection.

9. Structure balistique stratifiée selon la revendication 8, dans laquelle la couche de protection est une couche thermoplastique.

10. Structure balistique stratifiée selon l'une quelconque des revendications 1 à 9, dans laquelle la structure est une structure balistique stratifiée dure.
